(19) Europäisches Patentamt
European Patent Office
Office européen des brevets

(11) EP 2 459 498 B1

(12) **FASCICULE DE BREVET EUROPEEN**

(45) Date de publication et mention
de la délivrance du brevet:
**08.01.2014 Bulletin 2014/02**

(51) Int Cl.:
**C04B 35/478** (2006.01)   **C04B 35/653** (2006.01)
**C04B 38/00** (2006.01)   **F01N 3/022** (2006.01)

(21) Numéro de dépôt: **10754358.9**

(22) Date de dépôt: **27.07.2010**

(86) Numéro de dépôt international:
**PCT/FR2010/051586**

(87) Numéro de publication internationale:
**WO 2011/015766 (10.02.2011 Gazette 2011/06)**

(54) **GRAINS FONDUS D'OXYDES COMPRENANT AL, TI ET PRODUITS CERAMIQUES COMPORTANT DE TELS GRAINS**

GESCHMOLZENE OXIDKÖRNER MIT AL UND TI SOWIE KERAMIKMATERIALIEN MIT SOLCHEN KÖRNERN

MOLTEN OXIDE GRAINS INCLUDING AL AND TI, AND CERAMIC MATERIALS COMPRISING SAID GRAINS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **28.07.2009 FR 0955282**

(43) Date de publication de la demande:
**06.06.2012 Bulletin 2012/23**

(73) Titulaire: **Saint-Gobain Centre De Recherches Et D'etudes Europeen
92400 Courbevoie (FR)**

(72) Inventeur: **RAFFY, Stéphane
F-84300 Cavaillon (FR)**

(74) Mandataire: **Lucas, Francois
Saint-Gobain Recherche
39, quai Lucien Lefranc
F-93300 Aubervilliers (FR)**

(56) Documents cités:
EP-A1- 0 036 462    EP-A2- 0 210 813
WO-A2-2010/001065    DE-A1- 3 707 396
FR-A1- 2 609 021

**Description**

L'invention se rapporte à des grains pour applications céramiques constitués majoritairement d'oxydes comprenant les éléments Al, Ti. L'invention se rapporte également à un procédé de fabrication de tels grains, ainsi qu'à des matériaux et/ou produits céramiques constitués à partir desdits grains ou comprenant ceux-ci, en particulier mais pas uniquement, à des structures filtrantes ou des supports catalytiques, notamment utilisées dans une ligne d'échappement d'un moteur à combustion interne du type diesel.

Dans la suite de la description, par commodité et conformément aux habitudes dans le domaine des céramiques, on décrira lesdits oxydes comprenant les éléments par référence aux oxydes simples correspondants, par exemple $Al_2O_3$ ou $TiO_2$. Notamment, dans la description qui suit, sauf mention contraire, les proportions des différents éléments constituant les oxydes selon l'invention sont données par référence au poids des oxydes simples correspondants, rapportés en pourcentage poids par rapport à la totalité des oxydes présents dans lesdits grains.

Dans la suite de la description, on décrit plus particulièrement l'application des grains selon l'invention et leurs avantages dans le domaine spécifique des filtres ou supports catalytiques permettant l'élimination des polluants contenus dans les gaz d'échappement issus d'un moteur thermique essence ou diesel. Il est cependant bien entendu que de tels grains, par les avantages qu'ils procurent, sont susceptibles d'être utilisés avantageusement dans de nombreuses autres applications dans le domaine des céramiques, notamment dans tout domaine pour lequel une bonne stabilité thermique et/ou un faible coefficient de dilatation thermique (CTE) sont recherchés. On peut citer en particulier, mais sans s'y restreindre, les domaines suivants : fabrication de pièces réfractaires utilisées au contact de l'aluminium ou des métaux fondus, plaques à tiroirs, filtres à métaux ou fabrication de gazetterie pour les fours de frittage.

Dans le cas particulier des structures de dépollution des gaz d'échappement, celles ci présentent en général une structure en nid d'abeille.

De façon connue, durant son utilisation, un filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration. On conçoit donc que les propriétés de résistance mécanique aussi bien à basse qu'à haute température du matériau constitutif du filtre sont primordiales pour une telle application. De même, le matériau doit présenter une structure suffisamment stable pour supporter, notamment sur toute la durée de vie du véhicule équipé, des températures qui peuvent monter localement jusqu'à des valeurs sensiblement supérieures à 1000°C, notamment si certaines phases de régénérations sont mal contrôlées.

A l'heure actuelle, les filtres sont principalement en matière céramique poreuse, le plus souvent en carbure de silicium ou en cordiérite. De tels filtres catalytiques en carbure de silicium sont par exemple décrits dans les demandes de brevets EP 816 065, EP 1 142 619, EP 1 455 923 ou encore WO 2004/090294 et WO 2004/065088. De tels filtres permettent d'obtenir des structures filtrantes chimiquement inertes, d'excellente conductivité thermique et présentant des caractéristiques de porosité, en particulier la taille moyenne et la répartition en taille des pores, idéales pour une application de filtrage des suies issues d'un moteur thermique.

Cependant, certains inconvénients propres à ce matériau subsistent encore :

Un premier inconvénient est lié au coefficient de dilatation thermique un peu élevé du SiC, supérieure à $4.10^{-6}$ $K^{-1}$, qui n'autorise pas la fabrication de filtres monolithiques de grande taille et oblige le plus souvent à segmenter le filtre en plusieurs éléments en nid d'abeille liés par un ciment, tel que cela est décrit dans la demande EP 1 455 923. Un deuxième inconvénient, de nature économique, est lié à la température de cuisson extrêmement élevée, typiquement supérieure à 210°C, permettant un frittage assurant une résistance thermomécanique suffisante des structures en nid d'abeille, notamment lors des phases successives de régénération du filtre. De telles températures nécessitent la mise en place d'équipements spéciaux qui augmentent de façon sensible le coût du filtre finalement obtenu.

D'un autre coté, si les filtres en cordiérite sont connus et utilisés depuis longtemps, du fait de leur faible coût, il est aujourd'hui connu que des problèmes peuvent survenir dans de telles structures, notamment lors des cycles de régénération mal contrôlés, au cours desquels le filtre peut être soumis localement à des températures supérieures à la température de fusion de la cordiérite. Les conséquences de ces points chauds peuvent aller d'une perte d'efficacité partielle du filtre à sa destruction totale dans les cas les plus sévères. En outre, la cordiérite ne présente pas une inertie chimique suffisante, au regard des températures atteintes lors des cycles successifs de regénération et est de ce fait susceptible de réagir et d'être corrodé par les espèces provenant des résidus de lubrifiant, carburant ou autres huiles, accumulés dans la structure lors des phases de filtration, ce phénomène pouvant également être à l'origine de la détérioration rapide des propriétés de la structure.

Par exemple, de tels inconvénients sont décrits dans la demande de brevet WO 2004/011124 qui propose pour y remédier un filtre à base de titanate d'aluminium (60 à 90% poids), renforcé par de la mullite (10 à 40% poids), dont la durabilité est améliorée.

Selon une autre réalisation, la demande EP 1 559 696 propose l'utilisation de poudres pour la fabrication de filtres en nid d'abeille obtenues par frittage réactif des oxydes d'aluminium, de titane et de magnésium entre 1000 et 1700°C. Le matériau obtenu après frittage se présente sous la forme d'un mélange de deux phases : une phase majoritaire de type structural titanate d'alumine pseudobrookite $Al_2TiO_5$ contenant du titane, de l'aluminium et du magnésium et une phase minoritaire feldspath, du type $Na_yK_{1-y}AlSi_3O_8$.

Le document DE 3707396 montre un produit céramique comprenant des grains fondus présentant la composition chimique suivante, en pourcentage poids sur la base des oxydes: 53-55.5% de $Al_2O_3$, 32.75-43.9% de $TiO_2$, 0-3% de MgO, 0.15-7.9% de $SiO_2$, 0.05-3% de $ZrO_2$, 0.01-0.05% de CaO, 0.2% $Na_2O$, 0.2-0.5% de $Fe_2O_3$.

Cependant, les expérimentations effectuées par le demandeur ont montré qu'il était difficile à l'heure actuelle de garantir les performances d'une structure à base de matériaux du type titanate d'alumine, en particulier d'atteindre des valeurs de stabilité thermique et de résistance à la corrosion desdits matériaux, propres par exemple à les rendre directement utilisables dans une application haute température du type filtre à particules.

En particulier, dans l'application particulière de filtration des particules par un matériau du groupe des oxydes, la résistance à la corrosion doit être contrôlée, de manière à éviter des modifications de la porosité du filtre. Plus précisément, une forte propension à la corrosion du matériau utilisé comme constituant du filtre provoque une réaction susceptible de refermer la porosité et diminuer considérablement la capacité de filtration et, dans les cas les plus sévères, peut être à l'origine d'une fuite par perçage d'une paroi filtrante.

Selon un premier aspect, la présente invention se rapporte à de nouveaux grains comprenant ou constitués par un matériau oxyde du type titanate d'aluminium, présentant des propriétés, telles que précédemment décrites, sensiblement améliorées, notamment de manière à en rendre plus avantageux l'utilisation dans de nombreux domaines d'application des matériaux céramiques et en particulier pour la fabrication d'une structure filtrante et/ou catalytique, typiquement en nid d'abeille.

Plus précisément, selon un premier aspect, la présente invention se rapporte à des grains fondus présentant la composition chimique suivante, en pourcentages poids sur la base des oxydes:

- plus de 15% et moins de 55% d'$Al_2O_3$,
- plus de 25% et moins de 60% de $TiO_2$,
- moins de 20%, au total, d'au moins un oxyde d'un élément $M_1$ choisi parmi MgO, CoO,
- plus de 1% et moins de 20%, au total, d'au moins un oxyde d'un élément $M_2$ choisi dans le groupe constitué par $Fe_2O_3$, $Cr_2O_3$, $MnO_2$, $La_2O_3$, $Y_2O_3$, $Ga_2O_3$,
- moins de 20% au total, d'au moins un oxyde d'un élément $M_3$ choisi dans le groupe constitué par $ZrO_2$, $Ce_2O_3$, $HfO_2$,
- moins de 30% de $SiO_2$.

Lesdits grains fondus selon l'invention répondent en outre de préférence à une composition, en pourcentage molaire sur la base de la totalité des oxydes présents dans lesdits grains, telle que : $a' - t + 2m_1 + m_2$ soit compris entre -15 et 15,

dans laquelle :

- a est le pourcentage molaire d'$Al_2O_3$,
- s est le pourcentage molaire de $SiO_2$,
- $a' = a - 0,37 \times s$,
- t est le pourcentage molaire de $TiO_2$,
- $m_1$ est le pourcentage molaire total du ou des oxydes de $M_1$,
- $m_2$ est le pourcentage molaire total du ou des oxydes de $M_2$.

De préférence, dans la formulation précédente, $a' - t + 2m_1 + m_2$ est compris entre -10 et 10, de préférence encore $a' - t + 2m_1 + m_2$ est compris entre -8 et 8 et de manière très préférée $a' - t + 2m_1 + m_2$ est compris entre -6 et 6.

Selon l'invention, les grains selon l'invention peuvent ainsi contenir, outre les éléments Al et Ti, au moins un élément $M_1$ qui peut être choisi parmi Mg ou Co, au moins un élément $M_2$ qui peut être choisi parmi Fe, Cr, Mn, La, Y, Ga, au moins un élément $M_3$ qui peut être choisi parmi Zr, Ce ou Hf.

De préférence, $Al_2O_3$ représente plus de 20% de la composition chimique, les pourcentages étant donnés en poids sur la base des oxydes. Par exemple, notamment pour une application du type structure poreuse, $Al_2O_3$ peut représenter plus de 25% et de préférence encore plus de 35% de la composition chimique. De préférence $Al_2O_3$ représente moins de 52%, voire moins de 51% de la composition chimique, les pourcentages étant donnés en poids sur la base des oxydes.

De préférence, $TiO_2$ représente plus de 26% de la composition chimique. De préférence $TiO_2$ représente moins de 55%, voire moins de 50%, ou encore moins de 45% de la composition chimique, les pourcentages étant donnés en poids sur la base des oxydes.

De préférence, s'ils est (sont) présent(s), le ou les oxyde(s) de $M_1$ représente(nt) plus de 0,7%, voire plus de 1%, voire plus de 1,5% et de manière très préférée plus de 2% de la composition chimique. De préférence, le ou les oxyde (s) de $M_1$ représente (nt) moins de 10% et de manière très préférée moins de 6% de la composition chimique, les pourcentages étant donnés en poids et sur la base des oxydes.

De préférence, $M_1$ est Mg uniquement.

De préférence, le ou les oxyde(s) de $M_2$ représente (nt) plus de 1%, voire plus de 1,5% et de manière très préférée plus de 2% de la composition chimique. De préférence, le ou les oxyde (s) de $M_2$ représente (nt) au total moins de 10% et de manière très préférée moins de 6% de la composition chimique, les pourcentages étant donnés en poids et sur la base des oxydes.

De préférence, $M_2$ est Fe uniquement. En variante également préférée, l'élément $M_2$ peut être constitué par une combinaison de fer et de lanthane.

Dans un tel mode de réalisation, $Fe_2O_3$ (ou la somme des teneurs massiques des espèces $Fe_2O_3$ et $La_2O_3$) représente plus de 1% et de manière très préférée plus de 1,5% de la composition chimique. De préférence, $Fe_2O_3$ (ou la somme massique $Fe_2O_3 + La_2O_3$) représente moins de 10% et de manière très préférée moins de 9%, voire moins de 8% de la composition chimique, les pourcentages étant donnés en poids sur la base des oxydes.

Dans un mode de réalisation, la composition comprend du fer et du magnésium et éventuellement du lanthane. Les oxydes correspondants $Fe_2O_3$ et MgO et éventuellement $La_2O_3$ représentent alors, en poids et au total, plus de 1%, voire plus de 1,5% et de manière très préférée plus de 2% de la composition chimique des grains. De préférence $Fe_2O_3$ et MgO et éventuellement $La_2O_3$ représentent ensemble moins de 10% et de manière très préférée moins de 8%, voire moins de 6% de la composition chimique, les pourcentages étant donnés en poids sur la base des oxydes.

De préférence, s'il(s) est (sont) présent(s), le (ou les) oxyde (s) de $M_3$ représente (nt) au total plus de 0,7%, voire plus de 0,8% et de manière très préférée plus de 1% de la composition chimique, les pourcentages étant donnés en poids et sur la base des oxydes. De préférence, le (ou les) oxyde (s) de $M_3$ représente (nt) au total moins de 10% et de manière très préférée moins de 8% de la composition chimique.

De préférence, $M_3$ est Zr uniquement.

Les grains selon l'invention peuvent en outre comprendre d'autres éléments minoritaires. En particulier, les grains peuvent comprendre du silicium, dans une quantité par exemple comprise entre 0,1 et 20%, en poids sur la base de l'oxyde correspondant $SiO_2$. Par exemple, $SiO_2$ représente plus de 0,1%, notamment plus de 1% ou encore plus de 2% de la composition chimique. Par exemple, $SiO_2$ représente moins de 18%, notamment moins de 15%, voire moins de 12%, ou encore moins de 10% de la composition chimique, les pourcentages étant donnés en poids sur la base des oxydes.

Les grains peuvent en outre comprendre d'autres éléments tels que des alcalins ou des alcalino-terreux du type Ca, Sr, Na, K, Ba, la quantité sommée totale desdits éléments présents étant de préférence inférieure à 10% poids, par exemple inférieure à 5%, voire 4%, voire 3% poids, sur la base des oxydes correspondants CaO, SrO, $Na_2O$, $K_2O$, BaO rapportée au pourcentage poids de la totalité des oxydes présents dans lesdits grains. Le pourcentage poids de chaque élément minoritaire, sur la base du poids de l'oxyde correspond, est par exemple inférieur à 4%, voire 3%, voire 1%.

Afin de ne pas alourdir inutilement la présente description, toutes les combinaisons possibles selon l'invention entre les différents modes préférés des compositions des grains selon l'invention, tels qu'ils viennent d'être décrits précédemment, ne sont pas reportées. Il est cependant bien entendu que toutes les combinaisons possibles des domaines et valeurs initiaux et/ou préférés précédemment décrits sont envisagées à l'heure du dépôt de la présente demande et doivent être considérées comme décrites par le demandeur dans le cadre de la présente description (notamment de deux, trois combinaisons ou plus).

Les grains fondus selon l'invention peuvent comprendre principalement ou être constitués par une phase oxyde du type solution solide du type titanate d'aluminium comprenant du titane, de l'aluminium, et au moins un élément choisi parmi $M_1$, $M_2$ et/ou $M_3$.

De préférence, les grains fondus selon l'invention peuvent comprendre principalement ou être constitués par une phase oxyde du type solution solide comprenant du titane, de l'aluminium, du fer et éventuellement du magnésium et/ou du zirconium.

Par « principalement », il est entendu au sens de la présente description que ladite phase oxyde représente au moins 60% et de préférence au moins 70% ou même au moins 75% du poids total des grains.

Tout particulièrement, des grains selon l'invention peuvent avantageusement comprendre une phase oxyde principale du type titanate d'aluminium présentant la composition suivante, en pourcentage poids sur la base des oxydes:

- plus de 45% et moins de 55% d'$Al_2O_3$,
- plus de 30% et moins de 50% de $TiO_2$,
- plus de 1% et moins de 10% de $Fe_2O_3$,

- moins de 5% de $SiO_2$,
- moins de 5 % de $ZrO_2$.

Selon des modes de réalisation possibles :

- $Al_2O_3$ peut représenter entre 48 et 54% poids,
- $TiO_2$ peut représenter entre 35 et 48% poids, par exemple entre 38 et 45% poids,
- $Fe_2O_3$ peut représenter entre 1 et 8% poids, par exemple entre 2 et 6% poids,
- $SiO_2$ est présent dans des proportions inférieures à 1% poids, voire inférieure à 0,5% poids ou même n'est pas présent dans ladite phase,
- $ZrO_2$ est inférieur à 3% poids ou même n'est pas présent dans ladite phase.

Dans les compositions des grains précédemment données, selon l'autre mode préféré de réalisation de l'invention, le $Fe_2O_3$ ($M_2$ est Fe) peut être remplacé par une combinaison de $Fe_2O_3$ et de $La_2O_3$ ($M_2$ étant alors une combinaison de Fe et La), tel que précédemment décrit.

Bien que sa présence ne soit pas obligatoire selon l'invention, la phase peut également comprendre l'élément Mg, l'oxyde correspondant MgO pouvant dans ce cas représenter entre 0,5 et 8% du poids de la phase, par exemple entre 1 et 5% poids. Selon un autre mode possible, ladite phase ne contient pas l'élément Mg, sous une autre forme que des impuretés inévitables.

Les grains selon l'invention peuvent en outre comprendre une phase secondaire silicatée, dans des proportions pouvant aller de 0 à 40% du poids total des grains, de préférence de 0 à 30% et de manière très préférée de 0 à 25% du poids total des grains, par exemple entre 10 et 20% du poids total des grains. Selon l'invention, ladite phase silicatée peut être constituée principalement de silice et d'alumine. De préférence, la proportion de silice dans la phase silicatée est supérieure à 34%, voire supérieure à 40%, voire supérieure à 50%.

Les grains selon l'invention peuvent en outre ou alternativement comprendre, en fonction des éléments $M_1$, $M_2$ ou $M_3$ introduits initialement avant la fusion, au moins une phase secondaire et/ou minoritaire comprenant essentiellement de l'oxyde de titane $TiO_2$ et/ou de l'oxyde de zirconium $ZrO_2$ et/ou de l'oxyde de cérium $CeO_2$ et/ou de l'oxyde d'hafnium $HfO_2$. Par le terme « comprenant essentiellement », il est entendu que le pourcentage poids de $TiO_2$ et/ou de $ZrO_2$ et/ou de $CeO_2$ et/ou de $HfO_2$ dans cette phase est de l'ordre d'au moins 80%, voire d'au moins 90%.

Selon un deuxième aspect, l'invention a pour objet un produit ou un matériau céramique, obtenu par frittage des grains précédemment décrits, ledit produit ou matériau comprenant principalement ou étant constitué par une phase oxyde du type titanate d'aluminium, comprenant essentiellement de l'aluminium, du titane, $M_2$ et éventuellement au moins l'un des éléments $M_1$ et/ou $M_3$, ledit produit ou matériau contenant en outre éventuellement une phase silicatée.

L'invention se rapporte ainsi à un matériau ou à un produit céramique obtenu par frittage et se caractérisant en ce qu'il comprend des grains selon l'invention et dont la composition chimique comprend, en pourcentage poids sur la base des oxydes :

- plus de 15% et moins de 55% d'$Al_2O_3$,
- plus de 25% et moins de 60% de $TiO_2$,
- moins de 20%, au total, d'au moins un oxyde d'un élément $M_1$ choisi parmi MgO, CoO,
- plus de 1% et moins de 20%, au total, d'au moins un oxyde d'un élément $M_2$ choisi dans le groupe constitué par $Fe_2O_3$, $Cr_2O_3$, $MnO_2$, $La_2O_3$, $Y_2O_3$, $Ga_2O_3$,
- moins de 20% au total, d'au moins un oxyde d'un élément $M_3$ choisi dans le groupe constitué par $ZrO_2$, $Ce_2O_3$, $HfO_2$,
- moins de 30% de $SiO_2$.

D'une manière générale, toutes les modes de réalisation décrits précédemment en relation avec les compositions des grains fondus sont directement transposables au produit (ou matériau) céramique selon l'invention. Tout particulièrement, sont directement transposables à la composition du produit (ou du matériau) selon l'invention toutes les valeurs et tous les domaines préférés décrits précédemment en relation avec la composition des grains correspondants, notamment tous les valeurs et domaines qui concernent, sur la base des pourcentages poids des oxydes correspondants, les différents éléments susceptibles d'entrer dans leur composition, notamment Al, Ti, $M_1$, $M_2$, $M_3$, ainsi que les éléments Ca, Na, K, Sr, Ba.

Encore une fois, afin de ne pas alourdir inutilement la présente description, toutes les combinaisons possibles selon l'invention entre les différents modes préférés des compositions des produits ou matériaux selon l'invention, ne sont pas reportées. Il est cependant bien entendu que toutes les combinaisons possibles des domaines et valeurs initiaux et/ou préférés précédemment décrits en ce qui concerne la composition des grains constitutifs du matériau sont envisagées pour la composition du matériau lui-même, obtenu par frittage desdits grains fondus.

Tout particulièrement, des matériaux très performants ont été trouvés par le demandeur, comprenant une phase oxyde principale du type titanate d'aluminium présentant la composition suivante, en pourcentage poids sur la base des oxydes:

- plus de 45% et moins de 55% d'$Al_2O_3$,
- plus de 30% et moins de 50% de $TiO_2$,
- plus de 1% et moins de 10% de $Fe_2O_3$,
- moins de 5% de $SiO_2$,
- moins de 5 % de $ZrO_2$.

Notamment, selon certains modes possibles :

- $Al_2O_3$ peut représenter entre 48 et 54% poids,
- $TiO_2$ peut représenter entre 35 et 48% poids, par exemple entre 38 et 45% poids,
- $Fe_2O_3$ peut représenter entre 1 et 8% poids, par exemple entre 2 et 6% poids,
- $SiO_2$ est présent dans des proportions inférieures à 1% poids, voire inférieure à 0,5% poids ou même la phase est dépourvue de Si
- $ZrO_2$ est inférieur à 3% poids ou même la phase est dépourvue de Zr.

Bien que sa présence ne soit pas obligatoire selon l'invention, la phase peut également comprendre l'élément Mg, l'oxyde correspondant MgO pouvant dans ce cas représenter entre 0,5 et 8% poids de la phase, par exemple entre 1 et 5% poids . Selon un autre mode possible, ladite phase ne contient pas l'élément Mg, sous une autre forme que des impuretés inévitables.

Tout comme précédemment et dans un souci de concision de la présente demande, il est bien entendu que toutes les combinaisons possibles selon l'invention entre les différents modes initiaux ou préférés des compositions des phases de type titanate d'aluminium, tels qu'ils viennent d'être décrits précédemment, ne sont pas reportées mais doivent être considérées comme envisagées et décrites par le demandeur dans le cadre de la présente description (notamment de deux, trois combinaisons ou plus).

Par exemple, selon un mode de réalisation possible de l'invention, un produit céramique conforme présente la composition chimique suivante, en pourcentage poids sur la base des oxydes :

- plus de 35% et moins de 51% d'$Al_2O_3$, par exemple entre 38 et 50% d'$Al_2O_3$.
- plus de 25% et moins de 45% de $TiO_2$,
- plus de plus de 1% et moins de 20% de $Fe_2O_3$, par exemple entre 1 et 10% de $Fe_2O_3$.
- éventuellement plus de 0,1% et moins de 20% de $SiO_2$,
- moins de 2% de MgO, voire moins de 1% de MgO.
- éventuellement plus de 0,3% et moins de 10% de $ZrO_2$,
- éventuellement plus de 2% et moins de 13%, au total, d'au moins un oxyde choisi dans le groupe constitué par CaO, $Na_2O$, $K_2O$, SrO, BaO.

Le matériau ou produit céramique selon l'invention peut par exemple comprendre une phase principale constituée par la phase du type solution solide comprenant du titane, de l'aluminium, et des oxydes choisis parmi les oxydes de $M_1$, $M_2$ ou $M_3$ et au moins une phase silicatée et/ou au moins une phase constituée essentiellement d'oxyde de titane $TiO_2$ et/ou d'oxyde de zirconium $ZrO_2$ et/ou d'oxyde de cérium $CeO_2$ et/ou d'oxyde d'hafnium $HfO_2$.

De préférence, le matériau ou produit céramique selon l'invention peut comprendre principalement ou être constitué par une phase oxyde du type solution solide comprenant du titane, de l'aluminium, du fer et éventuellement du magnésium et/ou du zirconium et éventuellement au moins une phase silicatée et/ou au moins une phase constituée essentiellement d'oxyde de titane $TiO_2$ et/ou d'oxyde de zirconium $ZrO_2$.

Ladite phase silicatée peut être présente dans des proportions pouvant aller de 0 à 45% du poids total du matériau. Typiquement, ladite phase silicatée est constituée principalement de silice et d'alumine, la proportion massique de silice dans la phase silicatée étant supérieure à 34%.

Une autre phase secondaire peut comprendre essentiellement de l'oxyde de titane $TiO_2$ et/ou de l'oxyde de zirconium $ZrO_2$, et/ou de l'oxyde de cérium $CeO_2$ et/ou d'oxyde d'hafnium $HfO_2$.

Les grains de l'invention peuvent avantageusement être élaborés par électrofusion, ce qui permet la fabrication de grandes quantités de grains avec des rendements intéressants et un très bon rapport prix/performance. L'invention se rapporte également au procédé de fabrication de grains précédemment décrits, comportant les étapes suivantes :

a) mélange des matières premières pour former la charge de départ ;
b) fusion de la charge de départ jusqu'à obtention du liquide en fusion ;

c) refroidissement dudit liquide en fusion de manière à ce que le liquide fondu soit entièrement solidifié, par exemple en moins de 3 minutes;

d) broyage de ladite masse solide de manière à obtenir un mélange de grains fondus.

Selon l'invention, les matières premières sont choisies à l'étape a) de manière à ce que les grains fondus obtenus à l'étape d) soient conformes à l'invention.

Bien entendu, sans sortir du cadre de l'invention, tout autre procédé conventionnel ou connu de fabrication de grains fondus peut également être mis en oeuvre, pourvu que la composition de la charge de départ permette d'obtenir des grains présentant une composition conforme à celle des grains de l'invention.

A l'étape b), on utilise de préférence un four à arc électrique, mais tous les fours connus sont envisageables, comme un four à induction ou un four à plasma, pourvu qu'ils permettent de faire fondre complètement la charge de départ. La cuisson est de préférence effectuée dans des conditions neutres, par exemple sous argon, ou oxydantes, de préférence à pression atmosphérique.

A l'étape c), le refroidissement peut être rapide, c'est-à-dire que le liquide fondu est entièrement solidifié en moins de 3 minutes. De préférence il résulte d'un coulage dans des moules CS tels que décrits dans le brevet US 3,993,119 ou d'une trempe.

A l'étape d), la masse solide est broyée, selon des techniques conventionnelles, jusqu'à obtenir la taille des grains propre à l'application envisagée. Par exemple, le broyage peut être poursuivi jusqu'à l'obtention de grains de taille micrométrique, par exemple de l'ordre de 0,1 à 50 microns.

Selon une application particulière, le produit selon la présente invention est une structure du type en nid d'abeilles, faite d'un matériau céramique poreux, ladite structure étant constituée d'un matériau céramique poreux obtenu à partir des grains selon l'invention, ladite structure présentant en outre une porosité supérieure à 10% et une taille des pores centrée entre 5 et 60 microns.

Selon un aspect particulièrement important de la présente invention, celle-ci se rapporte à l'utilisation des grains précédemment décrits pour la fabrication de filtres à particules ou encore de supports catalytiques utilisés notamment pour la dépollution de gaz d'échappement automobile.

Lorsque les structures obtenues selon l'invention sont destinées à une utilisation comme filtre à particules, elles présentent une porosité adaptée en général comprise entre 20 et 65%, la taille moyenne des pores étant idéalement comprise entre 10 et 20 microns.

De telles structures filtrantes présentent le plus souvent une partie centrale comprenant un élément filtrant en nid d'abeille ou une pluralité d'éléments filtrants en nid d'abeille reliés entre eux par un ciment de joint, le ou lesdits éléments comprenant un ensemble de conduits ou canaux adjacents d'axes parallèles entre eux séparés par des parois poreuses, lesquels conduits étant obturées par des bouchons à l'une ou l'autre de leurs extrémités pour délimiter des chambres d'entrée s'ouvrant suivant une face d'admission des gaz et des chambres de sortie s'ouvrant suivant une face d'évacuation des gaz, de telle façon que le gaz traverse les parois poreuses.

Un procédé de fabrication d'une telle structure à partir d'un mélange initial de grains selon l'invention est par exemple le suivant :

Dans un premier temps, on mélange des grains fondus selon l'invention tels que précédemment décrits. Par exemple, les grains fondus ont été broyés de telle façon qu'ils présentent un diamètre médian inférieur à 50 microns, par exemple de l'ordre de 0,1 à 40 microns. Le procédé de fabrication comprend typiquement une étape de malaxage d'un mélange initial comprenant les grains, un liant organique du type méthylcellulose et un porogène puis en ajoutant de l'eau jusqu'à obtenir la plasticité souhaité pour permettre l'étape d'extrusion qui suit.

Par exemple, au cours de la première étape, on malaxe un mélange comprenant :

- au moins 5% par exemple au moins 50%, voire au moins 90% ou même 100% de grains selon l'invention, le reste du mélange pouvant être constitué de poudre ou de grains d'autres matériaux ou encore d'oxydes simples des éléments Al, Ti, $M_1$, $M_2$ ou $M_3$ ou de précurseurs desdits oxydes, par exemple sous forme de carbonates, hydroxydes ou autres organométalliques des précédents éléments,

- éventuellement de 1 à 30 % en masse d'au moins un agent porogène choisi en fonction de la taille des pores recherchée,

- au moins un plastifiant organique et/ou un liant organique,

- une quantité appropriée d'eau pour permettre la mise en forme du produit.

Par précurseur, on entend un matériau qui se décompose en l'oxyde simple correspondant à un stade souvent précoce du traitement thermique, c'est-à-dire à une température de chauffe typiquement inférieure à 1000°C, voire inférieure à 800° ou même à 500°C.

Le malaxage résulte en un produit homogène sous la forme d'une pâte. L'étape d'extrusion de ce produit à travers une filière appropriée permet d'obtenir des monolithes en forme de nid d'abeilles. Le procédé comprend par exemple ensuite une étape de séchage des monolithes obtenus. Au cours de l'étape de séchage, les monolithes céramiques crus obtenus sont typiquement séchés par micro-onde ou à une température pendant un temps suffisant pour amener la teneur en eau non liée chimiquement à moins de 1% en masse. Dans le cas ou l'on souhaite obtenir un filtre à particules, le procédé peut comprendre en outre une étape de bouchage d'un canal sur deux à chaque extrémité du monolithe.

L'étape de cuisson des monolithes est réalisée à une température supérieure à 1300°C mais ne dépassant pas 1800°C, de préférence ne dépassant pas 1750°C. Par exemple, durant cette étape de cuisson, la structure monolithe est portée à une température comprise entre 1400°C et 1600°C, sous une atmosphère contenant de l'oxygène ou un gaz neutre. Le procédé peut éventuellement comprendre une étape d'assemblage des monolithes en une structure de filtration assemblée selon des techniques bien connues, par exemple décrites dans la demande EP 816 065.

La présente invention se rapporte selon un exemple d'application à un filtre ou un support catalytique obtenu à partir d'une structure telle que précédemment décrite et par dépôt, de préférence par imprégnation, d'au moins une phase catalytique active supportée ou de préférence non supportée, comprenant typiquement au moins un métal précieux tel que Pt et/ou Rh et/ou Pd et éventuellement un oxyde tel que $CeO_2$, $ZrO_2$, $CeO_2$-$ZrO_2$. De telles structures trouvent notamment leur application comme support catalytique dans une ligne d'échappement d'un moteur diesel ou essence ou comme filtre à particules dans une ligne d'échappement d'un moteur diesel.

L'invention et ses avantages seront mieux compris à la lecture des exemples non limitatifs qui suivent. Dans les exemples, tous les pourcentages sont donnés en poids.

## Exemples :

Dans tous les exemples selon l'invention, les échantillons ont été préparés à partir des matières premières suivantes :

- Alumine AR75 comportant plus de 98% d'$Al_2O_3$, commercialisée par la société Alcan et présentant un diamètre médian $d_{50}$ d'environ 85 $\mu$m,

- Anathase comportant plus de 98% de $TiO_2$, commercialisée par la société Altichem ou rutile comportant plus de 95% de $TiO_2$ et présentant un diamètre médian $d_{50}$ d'environ 120 $\mu$m, commercialisée par la société Europe Minerals,

- $SiO_2$ avec un taux de pureté supérieur à 99,5% et de diamètre médian $d_{50}$ = 208 $\mu$m, commercialisée par la société Sifraco,

- MgO avec un taux de pureté supérieur à 98% avec plus de 80% de particules présentant un diamètre compris entre 0,25 et 1 mm, commercialisée par la société Nedmag,

- $Fe_2O_3$ avec un taux de pureté supérieur à 98%,

- Chaux comportant environ 97% de CaO, avec plus de 80% de particules présentant un diamètre inférieur à 80$\mu$m,

- Carbonate de strontium comportant plus de 98,5% de $SrCO_3$, commercialisée par la Société des Produits Chimiques Harbonnières,

- Carbonate de potassium comportant plus de 99,5% de $K_2CO_3$, commercialisée par la société Albemarle avec plus de 80% de particules présentant un diamètre compris entre 0,25 et 1 mm,

- Zircone avec un taux de pureté supérieur à 98,5% et de diamètre médian $d_{50}$ = 3,5 $\mu$m, commercialisée sous la référence CC10 par la société Saint-Gobain ZirPro,

- Oxyde de lanthane $La_2O_3$ avec un taux de pureté supérieur à 99%.

Les échantillons des exemples selon l'invention ont été obtenus par fusion du mélange des poudres précédentes, dans les proportions appropriées reportées dans le tableau 1.

Plus précisément les mélanges de réactifs initiaux ont été préalablement fondus au four à arcs électriques, sous air. Le mélange fondu a ensuite été coulé en moule CS de façon à obtenir un refroidissement rapide. Le produit obtenu est broyé et tamisé pour retenir la poudre passant à 36 $\mu$m. Cette poudre est utilisée pour réaliser des échantillons pressés de diamètre 10 mm qui sont ensuite frittés à la température indiquée dans le tableau 1 pendant 4 heures.

Les échantillons préparés sont ensuite analysés . Les résultats des analyses pratiquées sur chacun des échantillons des exemples sont regroupés dans les tableaux 1 et 2.

Dans les tableaux 1 et 2 :

1°) La composition chimique, indiquée en pourcentages poids sur la base des oxydes, a été déterminée par fluorescence des rayons X.

2°) Les phases cristallines présentes dans les produits réfractaires ont été caractérisées par diffraction des rayons X. Dans les tableaux 1 et 2, ATX indique une solution solide d'oxydes (phase principale), PS indique la présence d'une phase silicatée, autre(s) phase (s) indique la présence d'une moins une autre phase minoritaire P2, « ~ » signifie que la ou les phase(s) est présente(s) sous forme de traces.

3°) La stabilité des phases cristallines présentes est évaluée par un test consistant à comparer par diffraction des RX les phases cristallines présentes initialement à celles présentes après un traitement thermique de 100 heures à 1100°C. Le produit est considéré comme stable si l'intensité maximale du pic principal traduisant l'apparition de corindon $Al_2O_3$ après ce traitement reste inférieur à 50% de la moyenne des intensités maximales des 3 pics principaux de la phase ATX. Les valeurs reportées dans le tableau 1 correspondent au rapport, en pourcentage, entre l'intensité maximale du pic principal de la phase rutile par rapport à la moyenne des intensités maximales des 3 pics principaux de la phase ATX selon la formule :

$$Al_2O_3/Al_2TiO_5 = \frac{\text{Intensité max. du pic du pic principal du corindon}}{\text{Moyenne des intensités max. des 3 plus grands pics de } Al_2TiO_5}$$

Il est considéré qu'un rapport inférieur à 50 des intensités, donné en pourcentage et tel que décrit précédemment, caractérise une bonne stabilité du matériau et permet son utilisation en température.

4°) Le coefficient de dilatation thermique (CTE) correspond à la moyenne des valeurs obtenues classiquement de 25°C à 1000°C par dilatométrie sur des pastilles préparées à partir de poudres de même tranche granulométrique, dont le diamètre médian $d_{50}$ est inférieur à 50$\mu$m. Les pastilles sont obtenues par pressage puis frittage à la température indiquée dans le tableau 1 pendant 4h sous air.

Des échantillons comparatifs, non conformes à l'invention ont également été synthétisés et analysés selon les mêmes méthodes que précédemment décrites, avec cependant les modifications suivantes :

Selon les exemples comparatifs 1 et 4, les grains fondus ont été synthétisés sans introduire de source de métal $M_2$ (Fe) dans les réactifs initiaux.
Selon l'exemple comparatif 3, les grains fondus ont été synthétisés en introduisant une quantité insuffisante du métal $M_2$ (Fe), au sens de la présente invention, dans les réactifs initiaux.
Selon l'exemple comparatif 2, l'échantillon n'est pas synthétisé par frittage des grains fondus, c'est-à-dire à partir de grains obtenus par une étape de fusion préalable du mélange des matières premières précédemment décrites, mais directement à partir d'un frittage réactif du mélange des poudres des matières premières suivantes :

- Alumine Almatis CL4400FG comportant 99,8% d'$Al_2O_3$ et présentant un diamètre médian $d_{50}$ d'environ 5,2 $\mu$m,

- Oxyde de titane TRONOX T-R comportant 99,5% de $TiO_2$ et présentant un diamètre de l'ordre de 0,3$\mu$m,

- $SiO_2$ ElKem Microsilicia Grade 971U avec un taux de pureté de 99,7%,

- Carbonate de strontium comportant plus de 98,5% de $SrCO_3$, commercialisée par la Société des Produits Chimiques Harbonnières,

- Chaux comportant environ 97% de CaO, avec plus de 80% de particules présentant un diamètre inférieur à 80$\mu$m.

- $Fe_2O_3$ avec un taux de pureté supérieur à 98%.

Tableau 1

| Exemple | | 1 | 2 | 2b | 3 | 4 | 5 | 6 | 7 | 8 | Comp.1 | Comp.2 | Comp.3 | Comp.4 | comp.5 |
|---|---|---|---|---|---|---|---|---|---|---|---|---|---|---|---|
| $Al_2O_3$ | | 43,6 | 40,7 | 40,7 | 44,0 | 45,6 | 46,7 | 33,9 | 45,3 | 39,5 | 45,7 | 43,6 | 53,6 | 53,1 | 54,6 |
| $TiO_2$ | | 28,0 | 39,1 | 39,1 | 37,4 | 42,5 | 40,4 | 33,7 | 31,3 | 30,7 | 28,1 | 28,0 | 38,3 | 45,6 | 33,4 |
| $Fe_2O_3$ | | 3,87 | 12,8 | 12,8 | 4,52 | 3,98 | 3,9 | 18,4 | 6,29 | 10,7 | 0,06 | 3,87 | 0,70 | 0,04 | 5,34 |
| $SiO_2$ | | 14,2 | 4,04 | 4,04 | 3,37 | 0,16 | 0,19 | 8,28 | 10,1 | 10,3 | 15,5 | 14,2 | 4,19 | 0,12 | 3,12 |
| SrO | | 8,70 | 2,39 | 2,39 | 0 | 0 | 0 | 4,65 | 5,51 | 5,73 | 9,34 | 8,70 | 2,20 | 0 | 0 |
| CaO | | 1,15 | 0,38 | 0,38 | 0,19 | 0,03 | 0,02 | 0,57 | 0,87 | 0,93 | 1,13 | 1,15 | 0,33 | 0,05 | 0,04 |
| MgO | | 0 | 0 | 0 | 1,67 | 0 | 0 | 0 | 0 | 0 | 0 | 0 | 0 | 0 | 1,37 |
| $La_2O_3$ | | 0 | 0 | 0 | 0 | 0 | 0 | 0 | 0,17 | 0,13 | 0 | 0 | 0 | 0 | 0 |
| $Na_2O$ | | 0,11 | 0,08 | 0,08 | 0,08 | 0,07 | 0,07 | 0,05 | 0,07 | 0,05 | 0,13 | 0,11 | 0,16 | 0,16 | 0,07 |
| $K_2O$ | | 0 | 0 | 0 | 0,34 | 0,08 | 0,07 | 0 | 0 | 0 | 0,09 | 0 | 0 | 0,10 | 0 |
| $ZrO_2$ | | 0, 31 | 0,52 | 0,52 | 7,86 | 7,51 | 8,64 | 0,35 | 0,34 | 1,87 | 0 | 0,31 | 0,39 | 0 | 2,04 |
| a | | 37,3 | 37,3 | 37,3 | 39,0 | 41,8 | 43,0 | 31,2 | 39,8 | 35,3 | 38,3 | 37,3 | 47,3 | 47,4 | 49,1 |
| a' | | 29,6 | 34,9 | 34,9 | 36,9 | 41,7 | 42,9 | 26,4 | 34,2 | 29,5 | 30,1 | 29,6 | 44,9 | 47,4 | 47,3 |
| t | | 30,6 | 45,7 | 45,7 | 42,2 | 49,7 | 47,6 | 39,6 | 35,1 | 35,0 | 30,0 | 30,6 | 43,1 | 52,0 0 | 38,3 |
| $m_1$ | | 0 | 0 | 0 | 3,7 | 0 | 0 | 0 | 0 | 0 | 0 | 0 | 0 | 0 | 3,1 |
| $m_2$ | | 2,1 | 7,5 | 7,5 | 2,6 | 2,3 | 2,3 | 10,8 | 3,6 | 6,1 | 0,0 | 2,1 | 0,4 | 0 | 3,1 |
| $a' - t + 2m_1 + m_2$ | | 1,2 | -3,3 | -3,3 | 4,6 | -5,7 | -2,4 | -2,4 | 2,7 | 0,4 | 0,12 | 1,2 | 2,2 | -4,6 | 18,3 3 |
| Phases | PS | oui | oui | oui | oui | non | non | ND* | ND* | ND* | oui | oui | oui | non | ND* |
| | Autre(s) phase (s) (P2) | ~ | ~ | ~ | oui | oui | oui | ND* | ND* | ND* | ~ | ~ | ~ | ~ | ND* |
| Stabilité | 100 heures | oui | oui | oui | oui | oui | oui | oui | oui | oui | non | oui | non | non | non |
| | Rapport pics $Al_2O_3/Al_2TiO_5$ | < 10 | < 10 | ND* | ND* | ND* | ND* | ND* | ND* | ND* | > 500 | < 10 | > 500 | > 500 | 50 |
| Temp. frittage 4 h (°C) | | 1450 | 1450 | 1400 | 1450 | 1600 | 1600 | 1400 | 1450 | 1450 | 1450 | 1450 | 1450 | 1400 | 1450 |
| Densité | | 3,05 | 3,12 | 2,90 | 3,07 | 3,24 | 3,27 | 3,39 | 3,18 | 3,23 | 3,10 | 2,36 | 2,64 | 2,45 | ND* |

(suite)

| Exemple | 1 | 2 | 2b | 3 | 4 | 5 | 6 | 7 | 8 | Comp.1 | Comp.2 | Comp.3 | Comp.4 | comp.5 |
|---|---|---|---|---|---|---|---|---|---|---|---|---|---|---|
| Densité en pourcent de la densité théorique | 87,0 | 81,3 | 75,5 | ND | 82,0 | 83,0 | 89,7 | 87,1 | 88,1 | 89,6 | 67,2 | 71,7 | 65,5 | ND* |
| CTE ($10^{-6}$/°C) | 2,5 | 1,8 | 2,1 | 1,9 | 2,9 | 3,3 | 3,0 | 1,7 | 2,0 | 2,3 | 2,5 | 2,4 | 3,2 | ND* |
| *Non Déterminé | | | | | | | | | | | | | | |

Les propriétés de résistance à la corrosion des matériaux ont été évaluées pour l'exemple 1 selon l'invention et l'exemple comparatif 2, le matériau selon l'exemple 1 ayant été cette fois obtenu avec un apport initial de pyrogènes, afin d'obtenir une même densité pour les deux échantillons. Plus précisément 0,2 grammes de cendres synthétiques de composition massique CaO: 20,76%, ZnO: 10,45%, MgO: 4,02%, $SO_3$: 26,59%, $P_2O_5$: 14,63%, $Fe_2O_3$: 1,31%, $Al_2O_3$: 6,40%, $K_2O$: 0,52%, $Na_2O$: 8,41%, et $CaSO_4$: 6,92% sont déposés de façon uniforme sur la surface du disque. L'échantillon ainsi recouvert est ensuite porté à 1300°C sous air pendant 5 heures. Après refroidissement, l'échantillon est découpé selon une coupe radiale et préparé pour une observation en coupe au Microscope Electronique à Balayage. On évalue alors visuellement sur les photographies MEB la profondeur E de l'échantillon, à partir de la surface initiale du disque, affectée par la corrosion. La profondeur E affectée par l'érosion est de 580 microns pour l'échantillon selon l'invention (exemple 1 avec 25% de porogènes) et de 1060 microns pour l'échantillon comparatif (exemple comparatif 2).

L'analyse des données reportées dans le tableau 1 montre la supériorité des produits/matériaux obtenus à partir des grains selon l'invention :

- pour une composition similaire et une température de frittage identique, on observe que le matériau ou produit obtenu à partir des grains fondus selon l'invention (exemple 1) présente un coefficient de dilatation thermique sensiblement identique à celui du matériau obtenu par des méthodes conventionnelles du type frittage réactif tel qu'illustré par l'exemple 2 comparatif, la comparaison des épaisseurs corrodées E entre l'échantillon selon l'exemple 1 selon l'invention et l'échantillon selon l'exemple 2 comparatif indiquent cependant une résistance à la corrosion améliorée pour le matériau selon l'invention.

- en ce qui concerne la densité, on observe que les densités obtenues pour des matériaux selon l'invention sont importantes et supérieures à 80% de la densité théorique du matériau cristallin. Une telle propriété peut notamment s'avérer décisive dans des applications exigeant surtout une très grande densité du matériau, par exemple dans des applications où le produit est en contact avec un milieu corrosif (par exemple du type laitier ou métal fondu); une moindre porosité permet d'améliorer la résistance à l'infiltration. Ce peut être également utile dans des applications exigeant surtout une très grande résistance mécanique du matériau, par exemple dans le domaine des filtres de fonderie.

L'exemple 6 ou bien l'exemple 2b, comparé à l'exemple 2, montrent qu'il est possible d'abaisser la température de frittage tout en conservant des propriétés très satisfaisantes. La comparaison des exemples 1 selon l'invention et de l'exemple comparatif 1 montre en outre que la stabilité en température du matériau ne peut être obtenue, conformément à l'invention, que si la proportion du métal $M_2$ (Fe) dans ledit matériau et notamment dans la phase principale du type titanate d'aluminium, exprimé sur la base du pourcentage poids de l'oxyde $Fe_2O_3$ correspondant, est suffisante, notamment supérieure à au moins 1%. Dans le cas contraire, le matériau apparaît instable. Les matériaux selon les exemples comparatifs 3 et 4, dont la proportion en fer est également insuffisante au sens de la présente invention, présente de même une forte instabilité en température. Le matériau selon l'exemple comparatif 5, non conforme à l'invention en ce que le paramètre a'-t+2$m_1$+$m_2$ est supérieur à 15, montre une stabilité insuffisante.

La composition de chaque phase a ensuite été analysée par analyse microsonde, les résultats de l'analyse étant donnés dans le tableau 2. Sur la base de ces résultats, le pourcentage pondéral de chaque phase a pu être estimé par calcul.

Tableau 2

| Exemple | 1 | | 4 | | | 5 | | | Comparatif 1 | |
|---|---|---|---|---|---|---|---|---|---|---|
| | ATX | PS | ATX | P2a | P2b | ATX | P2a | P2b | ATX | PS |
| $Al_2O_3$ | 51,5 | 31,4 | 51,7 | 0,9 | 0,5 | 52,1 | 0,7 | | 56,2 | 30,7 |
| $TiO_2$ | 42,1 | 1,47 | 41,9 | 37,8 | 84,5 | 41,6 | 11,6 | 33,6 | 42,6 | 3,7 |
| $Fe_2O_3$ | 4,97 | 0,63 | 4,4 | 0,6 | 0,8 | 3,9 | 0,5 | 0, 6 | 0,1 | 0 |
| $SiO_2$ | 0,3 | 40,37 | 0 | 0 | 0 | 0 | 0 | 0 | 0,33 | 38,9 |
| SrO | 0 | 24,8 | 0 | 0 | 0 | 0 | 0 | 0 | 0 | 23,97 |
| CaO | 0 | 3,1 | 0 | 0 | 0 | 0 | 0 | 0 | 0 | 2,7 |
| MgO | 0 | 0 | 0 | 0 | 0 | 0 | 0 | 0 | 0 | 0 |
| $Na_2O$ | 0 | 0,3 | 0 | 0 | 0 | 0 | 0 | 0 | 0 | 0,33 |
| $K_2O$ | 0 | 0 | 0 | 0 | 0 | 0 | 0 | 0 | 0 | 0 |
| $ZrO_2$ | 0,43 | 0,07 | 1,9 | 60,7 | 14,2 | 2,3 | 87,2 | 65,0 | 0,33 | 0,47 |

(suite)

| Exemple | 1 | | 4 | | | 5 | | | Comparatif 1 | |
|---|---|---|---|---|---|---|---|---|---|---|
| | ATX | PS | ATX | P2a | P2b | ATX | P2a | P2b | ATX | PS |
| pourcentage estimé | 65 | 35 | 88 | 9 | 3 | 90 | 1 | 9 | 61 | 39 |

Les résultats reportés dans le tableau 2 montrent que les matériaux selon les exemples selon l'invention sont constitués par une phase principale oxyde du type solution solide comprenant du titane, de l'aluminium, du fer, dans des proportions très proches, et éventuellement du magnésium et/ou du zirconium dans des proportions très minoritaires. Les matériaux comprennent également une phase secondaire qui peut être une phase silicatée et/ou au moins une phase constituée essentiellement d'oxyde de titane $TiO_2$ et d'oxyde de zirconium $ZrO_2$, suivant la nature des réactifs initialement utilisés.

Selon une second série d'expériences, on a cherché à montrer les avantages des matériaux obtenus à partir des grains fondus selon l'invention, en thermes de résistance mécanique et de densité.

Deux échantillons supplémentaires sont préparés :

- un premier échantillon selon l'invention, obtenu à partir des grains préalablement fondus, selon un mode d'obtention tel que précédemment décrit. La composition chimique de ce premier échantillon, telle qu' analysée par fluorescence X est, en pourcentage poids équivalent des oxydes simples correspondants:

    $Al_2O_3$ : 45,5%, $TiO_2$ : 34,3%, $Fe_2O_3$ 6,37%, $SiO_2$ : 7,41%, SrO : 5,17%, CaO : 0,6%, $Na_2O$ : 0,13%, $ZrO_2$ : 0,39%. Le paramètre a' $-t+2m_1+m_2$ selon l'invention est égal à 1,0.

- un second échantillon non conforme à l'invention est ensuite préparé, selon la même composition en oxydes que le premier mais cette fois par mélange et frittage réactif direct des matières premières, selon un mode de préparation similaire à celui décrit dans l'exemple 2 comparatif qui précède.

Pour les deux échantillons, la résistance mécanique en compression MoR a été mesurée à la température ambiante, sur une presse LLOYD équipée d'un capteur de 10 kN, par compression avec une vitesse de 1 mm/min sur des pastilles de diamètre 10 mm et de hauteur 12 mm préparées à partir de poudres de même tranche granulométrique, dont le diamètre médian $d_{50}$ est inférieur à $50\mu$m. Les pastilles sont obtenues par pressage puis frittage des grains à la température de 1450°C pendant 4h, sous air.

Les MoR mesurés sont de 230 MPa pour le premier échantillon, obtenu à partir des grains fondus selon l'invention, et de seulement 24 MPa pour l'échantillon comparatif, obtenu à partir du frittage réactif des matières premières. Pour une composition similaire, on observe ainsi que les matériaux selon l'invention présentant une résistance mécanique MoR significativement supérieure.

De même, la densité mesurée pour le premier échantillon est de 3,14 (85% de la densité théorique du matériau cristallin), alors que cette densité n'est que de 2,31 pour le second échantillon (soit 63% de la densité théorique du matériau cristallin).

Les densités obtenues pour des matériaux selon l'invention sont donc sensiblement plus importantes que celles obtenues par les techniques classiques de frittage réactif.

Une telle amélioration peut notamment s'avérer décisive dans des applications exigeant surtout une très grande densité du matériau, par exemple dans des applications où le produit est en contact avec un milieu corrosif (par exemple du type laitier ou métal fondu) ; une moindre porosité permet d'améliorer la résistance à l'infiltration. Ce peut être également utile dans des applications exigeant surtout une très grande résistance mécanique du matériau, par exemple dans le domaine des filtres de fonderie.

Une telle amélioration peut par ailleurs permettre d'ajuster un niveau élevé de porosité (en particulier par l'apport d'un porogène aux réactifs initiaux) tout en conservant une bonne tenue mécanique.

Dans les exemples et la description qui précèdent, l'invention a été surtout décrite en relation avec les avantages qu'elle procure par rapport à une utilisation dans le domaine des filtres à particules.

Cependant, il est bien évident que l'invention concerne également l'utilisation des grains de l'invention dans d'autres applications, en particulier toutes celles où une bonne stabilité thermique ainsi qu'un bon CTE sont nécessaires. Selon l'application, on pourra notamment adapter la taille des grains fondus selon l'invention, en particulier en choisissant un mode de broyage adapté.

**Revendications**

1. Grains fondus présentant la composition chimique suivante, en pourcentages poids sur la base des oxydes:

   - plus de 15% et moins de 55% d'$Al_2O_3$,
   - plus de 25% et moins de 60% de $TiO_2$,
   - moins de 20%, au total, d'au moins un oxyde d'un élément $M_1$ choisi parmi MgO, CoO,
   - plus de 1% et moins de 20%, au total, d'au moins un oxyde d'un élément $M_2$ choisi dans le groupe constitué par $Fe_2O_3$, $Cr_2O_3$, $MnO_2$, $La_2O_3$, $Y_2O_3$, $Ga_2O_3$,
   - moins de 20% au total, d'au moins un oxyde d'un élément $M_3$ choisi dans le groupe constitué par $ZrO_2$, $Ce_2O_3$, $HfO_2$,
   - moins de 30% de $SiO_2$,

   lesdits grains répondant en outre à une composition, en pourcentage molaire sur la base de la totalité des oxydes présents dans lesdits grains, telle que :

   $a'$ - t + $2m_1$ + $m_2$ soit compris entre -15 et 15,

   dans laquelle :

   - a est le pourcentage molaire d'$Al_2O_3$,
   - s est le pourcentage molaire de $SiO_2$,
   - $a'$ = a - 0,37 $\times$ s,
   - t est le pourcentage molaire de $TiO_2$,
   - $m_1$ est le pourcentage molaire total du ou des oxydes de $M_1$,
   - $m_2$ est le pourcentage molaire total du ou des oxydes de $M_2$.

2. Grains fondus selon la revendication 1, dans lesquels la composition est telle que $a'$ - t + $2m_1$ + $m_2$ est compris entre -10 et 10, de préférence est compris entre -8 et 8 et de manière très préférée est compris entre -6 et 6.

3. Grains fondus selon la revendication 1 ou 2, dans lesquels $Al_2O_3$ représente en pourcentage poids plus de 25% de la composition chimique et moins de 52% de la composition chimique, notamment plus de 35 % de la composition chimique et moins de 51% de la composition chimique.

4. Grains fondus selon l'une des revendications précédentes, dans lesquels $TiO_2$ représente en pourcentage poids plus de 26% de la composition chimique et moins de 55% de la composition chimique, notamment moins de 50%, voire moins de 45% de la composition chimique.

5. Grains fondus selon l'une des revendications précédentes, dans lesquels le ou les oxydes des éléments $M_1$ présents dans ladite composition représentent en pourcentage poids au total plus de 0,7% de la composition chimique et moins de 10% de la composition chimique, notamment plus de 1% et moins de 6% de la composition chimique.

6. Grains fondus selon l'une des revendications précédentes, dans lesquels le ou les oxydes des éléments $M_2$ présents dans ladite composition représentent au total en pourcentage poids plus de 1% de la composition chimique et moins de 10% de la composition chimique, notamment plus de 2% et moins de 6% de la composition chimique.

7. Grains fondus selon l'une des revendications précédentes, dans lesquels le ou les oxydes des éléments $M_3$ présents dans ladite composition représentent en pourcentage poids au total plus de 0,7% de la composition chimique et moins de 10% de la composition chimique, notamment plus de 1% de la composition chimique et moins de 8% de la composition chimique.

8. Grains fondus selon l'une des revendications précédentes, comprenant en outre du silicium, dans des proportions comprises entre 0,1 et 20%, en poids sur la base de l'oxyde correspondant $SiO_2$.

9. Grains fondus selon l'une des revendications précédentes, dans lesquels $M_1$ est le magnésium exclusivement.

10. Grains fondus selon l'une des revendications précédentes, dans lesquels $M_2$ est le fer exclusivement.

**11.** Grains fondus selon l'une des revendications 1 à 9, dans lesquels $M_2$ est constitué par une combinaison de fer et de lanthane.

**12.** Grains fondus selon l'une des revendications précédentes, dans lesquels $M_3$ est le zirconium exclusivement.

**13.** Grains fondus selon l'une des revendications précédentes, comprenant une phase oxyde principale du type titanate d'aluminium présentant la composition suivante, en pourcentage poids sur la base des oxydes:

- plus de 45% et moins de 55% d'$Al_2O_3$,
- plus de 30% et moins de 50% de $TiO_2$,
- plus de 1% et moins de 10% de $Fe_2O_3$,
- moins de 5% de $SiO_2$,
- moins de 5 % de $ZrO_2$.

**14.** Produit ou matériau céramique, obtenu par frittage des grains selon l'une des revendications 1 à 13, ledit produit ou matériau comprenant principalement ou étant constitué par une phase oxyde du type titanate d'aluminium comprenant essentiellement de l'aluminium, du titane, $M_2$ et éventuellement au moins l'un des éléments $M_1$ et/ou $M_3$.

**15.** Produit ou matériau céramique selon la revendication 14, présentant la composition chimique suivante, en pourcentage poids sur la base des oxydes :

- plus de 15% et moins de 55% d'$Al_2O_3$,
- plus de 25% et moins de 60% de $TiO_2$,
- moins de 20%, au total, d'au moins un oxyde d'un élément $M_1$ choisi parmi MgO, CoO,
- plus de 1% et moins de 20%, au total, d'au moins un oxyde d'un élément $M_2$ choisi dans le groupe constitué par $Fe_2O_3$, $Cr_2O_3$, $MnO_2$, $La_2O_3$, $Y_2O_3$, $Ga_2O_3$,
- moins de 20% au total, d'au moins un oxyde d'un élément $M_3$ choisi dans le groupe constitué par $ZrO_2$, $Ce_2O_3$, $HfO_2$,
- moins de 30% de $SiO_2$.

**16.** Produit ou matériau céramique selon l'une des revendications 14 ou 15, comprenant une phase oxyde principale du type titanate d'aluminium présentant la composition suivante, en pourcentage poids sur la base des oxydes:

- plus de 45% et moins de 55% d'$Al_2O_3$,
- plus de 30% et moins de 50% de $TiO_2$,
- plus de 1% et moins de 10% de $Fe_2O_3$,
- moins de 5% de $SiO_2$,
- moins de 5 % de $ZrO_2$.

**17.** Structure en nid d'abeille pour une application comme support catalytique ou filtre à particule dans une ligne d'échappement automobile, faite d'un matériau céramique selon l'une des revendications 14 à 16 ou obtenu par frittage des grains selon l'une des revendications 1 à 13.

**Patentansprüche**

**1.** Geschmolzene Körner, welche die folgende chemische Zusammensetzung, in Gewichtsprozenten auf der Basis der Oxide aufweisen:

- mehr als 15 % und weniger als 55 % $Al_2O_3$,
- mehr als 25 % und weniger als 60 % $TiO_2$,
- weniger als 20 % insgesamt von wenigstens einem Oxid eines Elements $M_1$, das aus MgO, CoO ausgewählt ist,
- mehr als 1 % und weniger als 20 % insgesamt von wenigstens einem Oxid eines Elements $M_2$, das aus der Gruppe bestehend aus $Fe_2O_3$, $Cr_2O_3$, $MnO_2$, $La_2O_3$, $Y_2O_3$, $Ga_2O_3$ ausgewählt ist,
- weniger als 20 % insgesamt von wenigstens einem Oxid eines Elements $M_3$, das aus der Gruppe bestehend aus $ZrO_2$, $Ce_2O_3$, $HfO_2$ ausgewählt ist,
- weniger als 30 % $SiO_2$,

wobei die Körner ferner einer Zusammensetzung, in Molprozent auf der Basis aller in den Körnern vorhandenen Oxide gerecht werden, die derart ist, dass:

$a' - t + 2m_1 + m_2$ zwischen -15 und 15 liegt,

worin:

- a der Molprozentsatz von $Al_2O_3$ ist,
- s der Molprozentsatz von $SiO_2$ ist,
- $a' = a - 0{,}37 \times s$,
- t der Molprozentsatz von $TiO_2$ ist,
- $m_1$ der Gesamtmolprozentsatz des oder der Oxide(s) von $M_1$ ist,
- $m_2$ der Gesamtmolprozentsatz des oder der Oxide(s) von $M_2$ ist.

2. Geschmolzene Körner nach Anspruch 1, wobei die Zusammensetzung derart ist, dass $a' - t + 2m_1 + m_2$ zwischen -10 und 10, vorzugsweise zwischen -8 und 8 und sehr bevorzugt zwischen -6 und 6 liegt.

3. Geschmolzene Körner nach Anspruch 1 oder 2, wobei $Al_2O_3$ in Gewichtsprozent mehr als 25 % der chemischen Zusammensetzung und weniger als 52 % der chemischen Zusammensetzung, insbesondere mehr als 35 % der chemischen Zusammensetzung und weniger als 51 % der chemischen Zusammensetzung ausmacht.

4. Geschmolzene Körner nach einem der vorstehenden Ansprüche, wobei $TiO_2$ in Gewichtsprozent mehr als 26 % der chemischen Zusammensetzung und weniger als 55 % der chemischen Zusammensetzung, insbesondere weniger als 50 %, sogar weniger als 45 % der chemischen Zusammensetzung ausmacht.

5. Geschmolzene Körner nach einem der vorstehenden Ansprüche, wobei das oder die Oxid(e) der in der Zusammensetzung vorhandenen Elemente $M_1$ in Gewichtsprozent insgesamt mehr als 0,7 % der chemischen Zusammensetzung und weniger als 10 % der chemischen Zusammensetzung, insbesondere mehr als 1 % und weniger als 6 % der chemischen Zusammensetzung ausmachen.

6. Geschmolzene Körner nach einem der vorstehenden Ansprüche, wobei das oder die Oxid(e) der in der Zusammensetzung vorhandenen Elemente $M_2$ insgesamt in Gewichtsprozent mehr als 1 % der chemischen Zusammensetzung und weniger als 10 % der chemischen Zusammensetzung, insbesondere mehr als 2 % und weniger als 6 % der chemischen Zusammensetzung ausmachen.

7. Geschmolzene Körner nach einem der vorstehenden Ansprüche, wobei das oder die Oxid(e) der in der Zusammensetzung vorhandenen Elemente $M_3$ in Gewichtsprozent insgesamt mehr als 0,7 % der chemischen Zusammensetzung und weniger als 10 % der chemischen Zusammensetzung, insbesondere mehr als 1 % der chemischen Zusammensetzung und weniger als 8 % der chemischen Zusammensetzung ausmachen.

8. Geschmolzene Körner nach einem der vorstehenden Ansprüche, ferner umfassend Silizium in Anteilen zwischen 0,1 und 20 Gew.-% auf der Basis des entsprechenden Oxids $SiO_2$.

9. Geschmolzene Körner nach einem der vorstehenden Ansprüche, wobei $M_1$ ausschließlich Magnesium ist.

10. Geschmolzene Körner nach einem der vorstehenden Ansprüche, wobei $M_2$ ausschließlich Eisen ist.

11. Geschmolzene Körner nach einem der Ansprüche 1 bis 9, wobei $M_2$ durch eine Kombination aus Eisen und aus Lanthan gebildet ist.

12. Geschmolzene Körner nach einem der vorstehenden Ansprüche, wobei $M_3$ ausschließlich Zirkonium ist.

13. Geschmolzene Körner nach einem der vorstehenden Ansprüche, umfassend eine Hauptoxidphase vom Typ Aluminiumtitanat, welche die folgende Zusammensetzung, in Gewichtsprozent auf der Basis der Oxide aufweist:

- mehr als 45 % und weniger als 55 % $Al_2O_3$,
- mehr als 30 % und weniger als 50 % $TiO_2$,
- mehr als 1 % und weniger als 10 % $Fe_2O_3$,

- weniger als 5 % $SiO_2$,
- weniger als 5 % $ZrO_2$.

14. Keramikprodukt oder -material, das durch Sintern der Körner nach einem der Ansprüche 1 bis 13 erhalten wird, wobei das Produkt oder Material hauptsächlich umfasst oder gebildet ist durch eine Oxidphase vom Typ Aluminiumtitanat, die im Wesentlichen Aluminium, Titan, $M_2$ und eventuell wenigstens eines der Elemente $M_1$ und/oder $M_3$ umfasst.

15. Keramikprodukt oder -material nach Anspruch 14, das die folgende chemische Zusammensetzung, in Gewichtsprozent auf der Basis der Oxide aufweist:

- mehr als 15 % und weniger als 55 % $Al_2O_3$,
- mehr als 25 % und weniger als 60 % $TiO_2$,
- weniger als 20 % insgesamt von wenigstens einem Oxid eines Elements $M_1$, das aus MgO, CoO ausgewählt ist,
- mehr als 1 % und weniger als 20 % insgesamt von wenigstens einem Oxid eines Elements $M_2$, das aus der Gruppe bestehend aus $Fe_2O_3$, $Cr_2O_3$, $MnO_2$, $La_2O_3$, $Y_2O_3$, $Ga_2O_3$ ausgewählt ist,
- weniger als 20 % insgesamt von wenigstens einem Oxid eines Elements $M_3$, das aus der Gruppe bestehend aus $ZrO_2$, $Ce_2O_3$ $HfO_2$ ausgewählt ist,
- weniger als 30 % $SiO_2$.

16. Keramikprodukt oder -material nach einem der Ansprüche 14 oder 15, umfassend eine Hauptoxidphase vom Typ Aluminiumtitanat, welche die folgende Zusammensetzung, in Gewichtsprozent auf der Basis der Oxide aufweist:

- mehr als 45 % und weniger als 55 % $Al_2O_3$,
- mehr als 30 % und weniger als 50 % $TiO_2$,
- mehr als 1 % und weniger als 10 % $Fe_2O_3$,
- weniger als 5 % $SiO_2$,
- weniger als 5 % $ZrO_2$.

17. Bienenwabenstruktur für eine Anwendung als katalytischer Träger oder Partikelfilter in einer Kraftfahrzeugauspuffanlage, die aus einem Keramikmaterial nach einem der Ansprüche 14 bis 16 gefertigt ist oder durch Sintern der Körner nach einem der Ansprüche 1 bis 13 erhalten wird.

**Claims**

1. Fused particles having the following chemical composition, as a percentage by weight on the basis of the oxides:

- more than 15% but less than 55% of $Al_2O_3$;
- more than 25% but less than 60% of $TiO_2$;
- less than 20%, in total, of at least one oxide of an element $M_1$, chosen from MgO and CoO;
- more than 1% but less than 20%, in total, of at least one oxide of an element $M_2$, chosen from the group formed by $Fe_2O_3$ , $Cr_2O_3$ , $MnO_2$ , $La_2O_3$, $Y_2O_3$ and $Ga_2O_3$ ;
- less than 20%, in total, of at least one oxide of an element $M_3$, chosen from the group formed by $ZrO_2$, $Ce_2O_3$ and $HfO_2$; and
- less than 30% of $SiO_2$,

said particles furthermore corresponding to a composition, in mol% on the basis of all of the oxides present in said particles, such that: $a' - t + 2m_1 + m_2$ is between -15 and 15, in which:

- a is the molar percentage of $Al_2O_3$;
- s is the molar percentage of $SiO_2$;
- $a' = a-0.37s$;
- t is the molar percentage of $TiO_2$ ;
- $m_1$ is the total molar percentage of the oxide(s) of $M_1$ ; and
- $m_2$ is the total molar percentage of the oxide(s) of $M_2$.

2. The fused particles as claimed in claim 1, in which the composition is such that $a'-t+2m_1+m_2$ is between -10 and 10, preferably is between -8 and 8 and very preferably is between -6 and 6.

3. The fused particles as claimed in claim 1 or 2, in which $Al_2O_3$ represents as a percentage by weight more than 25% of the chemical composition but less than 52% of the chemical composition, especially more than 35% of the chemical composition but less than 51% of the chemical composition.

4. The fused particles as claimed in one of the preceding claims, in which $TiO_2$ represents as a percentage by weight more than 26% of the chemical composition but less than 55% of the chemical composition, especially less than 50% or even less than 45% of the chemical composition.

5. The fused particles as claimed in one of the preceding claims, in which the one or more oxides of the elements $M_1$ present in said composition represent as a percentage by weight in total more than 0.7% of the chemical composition but less than 10% of the chemical composition, especially more than 1% but less than 6% of the chemical composition.

6. The fused particles as claimed in one of the preceding claims, in which the one or more oxides of the elements $M_2$ present in said composition represent in total as a percentage by weight more than 1% of the chemical composition but less than 10% of the chemical composition, especially more than 2% but less than 6% of the chemical composition.

7. The fused particles as claimed in one of the preceding claims, in which the one or more oxides of the elements $M_3$ present in said composition represent, as a percentage by weight in total more than 0.7% of the chemical composition but less than 10% of the chemical composition, especially more than 1% of the chemical composition but less than 8% of the chemical composition.

8. The fused particles as claimed in one of the preceding claims, which furthermore comprise silicon in proportions of between 0.1 and 20% by weight on the basis of the corresponding oxide $SiO_2$.

9. The fused particles as claimed in one of the preceding claims, in which $M_1$ is exclusively magnesium.

10. The fused particles as claimed in one of the preceding claims, in which $M_2$ is exclusively iron.

11. The fused particles as claimed in one of claims 1 to 9, in which $M_2$ is formed by a combination of iron and lanthanum.

12. The fused particles as claimed in one of the preceding claims, in which $M_3$ is exclusively zirconium.

13. The fused particles as claimed in one of the preceding claims, comprising a main oxide phase of the aluminum titanate type having the following composition, in wt% on the basis of the oxides:

- more than 45% but less than 55% of $Al_2O_3$;
- more than 30% but less than 50% of $TiO_2$;
- more than 1% but less than 10% of $Fe_2O_3$;
- less than 5% of $SiO_2$; and
- less than 5% of $ZrO_2$.

14. A ceramic product or material obtained by sintering the particles as claimed in one of claims 1 to 13, said product or material comprising mainly or being formed by an oxide phase of the aluminum titanate type, essentially comprising aluminum, titanium, $M_2$ and optionally at least one of the elements $M_1$ and/or $M_3$.

15. The ceramic product or material as claimed in claim 14, having the following chemical composition, in wt% on the basis of the oxides:

- more than 15% but less than 55% of $Al_2O_3$;
- more than 25% but less than 60% of $TiO_2$;
- less than 20%, in total, of at least one oxide of an element $M_1$, chosen from MgO and CoO;
- more than 1% but less than 20%, in total, of at least one oxide of an element $M_2$, chosen from the group formed by $Fe_2O_3$, $Cr_2O_3$, $MnO_2$, $La_2O_3$, $Y_2O_3$ and $Ga_2O_3$;
- less than 20%, in total, of at least one oxide of an element $M_3$, chosen from the group formed by $ZrO_2$, $Ce_2O_3$ and $HfO_2$; and
- less than 30% of $SiO_2$.

**16.** The ceramic product or material as claimed in either of claims 14 and 15, comprising a main oxide phase of the aluminum titanate type having the following composition, in wt% on the basis of the oxides:

- more than 45% but less than 55% of $Al_2O_3$;
- more than 30% but less than 50% of $TiO_2$;
- more than 1% but less than 10% of $Fe_2O_3$;
- less than 5% of $SiO_2$; and
- less than 5% of $ZrO_2$.

**17.** A honeycomb structure for an application as a catalyst support or particulate filter in an automobile exhaust line, made of a ceramic material as claimed in one of claims 14 to 16 or obtained by sintering the particles as claimed in one of claims 1 to 13.

EP 2 459 498 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 816065 A
- EP 1142619 A
- EP 1455923 A
- WO 2004090294 A
- WO 2004065088 A

- WO 2004011124 A
- EP 1559696 A
- DE 3707396
- US 3993119 A